# EUROPEAN PATENT SPECIFICATION

(11) **EP 4 029 709 B1**
(45) Date of publication and mention of the grant of the patent: **03.01.2024**
(21) Application number: 21735565.0
(22) Date of filing: 17.06.2021
(51) Int. Cl.: B60H 1/22, F02N 19/02, F24H 3/06

(54) **PARKING FUEL OIL AIR HEATER WITH TWO BRUSHLESS ELECTRIC MOTOR COMBUSTION HEADS**
DUALE KRAFTSTOFF-LUFT-STANDHEIZUNG MIT VERBRENNUNGSKOPF UND BÜRSTENLOSEM MOTOR
CHAUFFAGE STATIONNAIRE SOUFFLANT AU FIOUL À DEUX TÊTES DE COMBUSTION DE MOTEUR ÉLECTRIQUE SANS BALAIS

(30) Priority: 27.11.2020 CN 202011351660; 27.11.2020 CN 202022794726 U
(43) Date of publication of application: 20.07.2022
(73) Proprietor: Jingwei Vehicle Equipment Co., Ltd., Langfang, Hebei 065300 (CN)
(72) Inventor: YANG, Fei, Langfang Hebei 065300 (CN); WANG, Haibo, Langfang Hebei 065300 (CN); LIU, Fengyun, Langfang Hebei 065300 (CN)
(74) Representative: Osterhoff, Utz
(86) International application number: PCT/CN2021/100474
(87) International publication number: WO 2022/110772

(56) References cited:
- WO-A1-2019/233538
- CN-A- 106 985 634
- CN-A- 112 389 164
- CN-U- 201 851 254
- CN-U- 206 092 222
- CN-U- 206 678 737
- CN-U- 207 010 453
- DE-A1- 10 002 217
- DE-A1- 19 652 970
- DE-A1-102014 210 005
- DE-B- 1 130 572
- KR-A- 20120 045 646
- US-A- 2 779 398
- US-A1- 2019 135 076
- US-B2- 6 743 012

## Description

This invention claims the priority of Chinese Patent invention No. 202011351660.6, filed on November 27, 2020 and entitled "DUAL BRUSHLESS MOTOR COMBUSTION HEAD PARKING FUEL AIR HEATER", and Chinese Patent invention No. 202022794726.0, filed on November 27, 2020 and entitled "DUAL BRUSHLESS MOTOR COMBUSTION HEAD PARKING FUEL AIR HEATER".

### technical field

This invention relates to the technical field of air heaters, in particular to a dual brushless motor combustion head parking fuel air heater.

### Background

At present, the combustion head of the parking fuel air heater generally adopts one motor, and a shaft is protruded from each of the two ends of the motor, so as to drive the combustion-supporting wind wheel and the hot wind wheel to rotate synchronously. Too high or too low speed of the combustion-supporting wind wheel will cause the fire to be blown off in strong wind or insufficient oxygen combustion in low wind, so the rotating speed of the hot wind wheel cannot be increased at will to increase the air volume since it is limited by the rotating speed of the combustion-supporting wind wheel. The internal heat of the heater needs to be considered for the air volume of the hot wind wheel when the heater changes from high to low, and if the rotating speed of the hot wind wheel drops too fast, the internal heat of the heater cannot be blown out in time, which will cause heat accumulation, so the downshift time of the combustion-supporting wind wheel is longer since it is limited by the hot wind wheel. When it is necessary to shut down the machine, the combustion-supporting wind wheel supports combustion at low speed to consume residual fuel, so that the hot air wind wheel can not cool the machine at high speed and high air volume, resulting in a long shutdown delay. The two wind wheels restrict each other's speed, the hot air channel connected with the air heater on the market has tended to be a multi-branch and multi-outlet integrated air duct, which replaces the original shorter hot air duct arrangement, and the air volume of the hot wind wheel driven by a single motor is limited by the combustion-supporting wind wheel, so that the heating requirements of the integrated air duct can no longer meet, the air volume of the outlet at the far end of the integrated air duct is weak and the heating effect is not good.

DE 1130572 B provides a safety device on air heaters fired with liquid fuel, which solves this problem in that means are provided which when decommissioned of the device automatically shuts down the combustion air fan motor cause before that of the hot air blower motor, and that the hot air blower on the pressure side is tapped through a branch line, which has a low partial flow of hot air directs into the combustion chamber.

In view of the problems in related arts, no effective solutions have been proposed.

### Summary

In view of the above technical problems in the related art, this invention provides a dual brushless motor combustion head parking fuel air heater according to claim 1, which can solve the above problems.

In order to achieve the above technical purpose, the technical scheme of this invention is realized as follows:
A dual brushless motor combustion head parking fuel air heater, including a housing assembly, an air inlet connected to the housing assembly and an air outlet connected to the housing assembly. A heat exchanger is provided at an end of the housing assembly close to the air outlet. A heat exchange channel is arranged between the heat exchanger and the housing assembly, and the heat exchange channel is respectively communicated with the air inlet and the air outlet. A hot wind wheel brushless motor is provided at the air inlet, and the hot wind wheel brushless motor is connected with a hot wind wheel. The heat exchanger is connected with an aluminum bracket, and a combustion-supporting wind wheel brushless motor and a combustion-supporting air inlet are provided in the aluminum bracket. An output shaft of the combustion-supporting wind wheel brushless motor is configured to penetrate through the aluminum bracket and connect with a combustion-supporting wind wheel, and the combustion-supporting air inlet is located at one side close to the combustion-supporting wind wheel. A combustion chamber assembly is provided inside the heat exchanger, the combustion chamber assembly and the combustion-supporting wind wheel are located on a same straight line, and an ignition plug assembly and a fuel inlet are provided inside the combustion chamber assembly. A controller is provided on an outside of the housing assembly, and the controller is respectively electrically connected with the hot wind wheel brushless motor, the combustion-supporting wind wheel brushless motor and the ignition plug assembly. The combustion-supporting wind wheel brushless motor is configured to drive the combustion-supporting wind wheel to rotate when a whole machine is ignited, the controller is configured to control gradual increase of fuel supply and combustion-supporting air volume, the heat exchanger is configured to diffuse heat into the heat exchange channel and the hot wind wheel is configured to carry out the heat, the controller is further configured to control reduction of the fuel volume and the combustion-supporting air volume, at the same time control increase of a power of the hot wind wheel brushless motor, and control the hot wind wheel to carry out the heat when an actual inlet air temperature detected by the second temperature sensor is higher than a preset inlet air temperature, and the controller is further configured to control fuel cut-off, cease-fire and alarm, control the combustion-supporting wind wheel to gradually slow down and stop, and control the hot wind wheel to increase the rotating speed when a temperature detected by the first temperature sensor is higher than a preset alarm temperature.

Further, a first temperature sensor is provided on an outer side wall of the heat exchanger, and the first temperature sensor is electrically connected to the controller.

Further, a second temperature sensor is provided at the air inlet, and the second temperature sensor is electrically connected to the controller.

Further, the fuel inlet is connected with a fuel volatilization net.

Further, a sealing damping pad is provided on an outer side wall of the housing assembly, the heat exchanger defines an exhaust gas outlet, and the combustion-supporting air inlet, the exhaust gas outlet and the fuel inlet are configured to extend to the sealing damping pad.

Further, the controller is configured to control rotating speeds of the hot wind wheel and the combustion-supporting wind wheel respectively to reduce downshift time and shutdown delay time.

Further, the combustion-supporting wind wheel brushless motor is configured to drive the combustion-supporting wind wheel to rotate when a whole machine is ignited, so that oxygen enters from the combustion-supporting air inlet and then enters the combustion chamber assembly. The combustion chamber assembly is configured to transport fuel to the fuel volatilization net through the fuel inlet and form atomized fuel with the combustion-supporting wind wheel. The ignition plug assembly is configured for ignition and configured to flameout when a preset temperature difference is detected by the first temperature sensor.

Further, the controller is further configured to control cut-off of fuel passage of the fuel inlet, at the same time control the combustion-supporting wind wheel to gradually slow down and stop, control the ignition plug assembly to ignite to clean up remaining fuel, and control the hot wind wheel to increase the rotating speed to carry out heat to reduce shutdown delay when shutting down.

This invention is provided with a heat exchanger, a hot wind wheel brushless motor, a hot wind wheel, a combustion-supporting wind wheel brushless motor, a combustion-supporting wind wheel, a combustion chamber assembly, a first temperature sensor and a second temperature sensor, which solves the problem of long downshift time and shutdown delay time by controlling the rotating speeds of the hot wind wheel and the combustion-supporting wind wheel respectively, and meets the heating requirements of the integrated air duct, thereby the heating effect is improved.

### Brief description of the accompanying drawings

In order to more clearly explain the embodiments of this invention or the technical solutions in the art, the drawings used in the description of the embodiments will be briefly introduced below. Obviously, the drawings in the following description are merely some embodiments of this invention. For those of ordinary skill in the art, other drawings can be obtained based on these drawings without paying creative work.
FIG. 1 is a cross-sectional view of a dual brushless motor combustion head parking fuel air heater according to an embodiment of this invention.
FIG. 2 is a partial cross-sectional view of the dual brushless motor combustion head parking fuel air heater according to an embodiment of this invention.
FIG. 3 is an outline structure diagram of the dual brushless motor combustion head parking fuel air heater according to an embodiment of this invention.

In the drawings: 1. Housing assembly, 2. Air inlet, 3. Air outlet, 4. Heat exchanger, 5. Hot wind wheel brushless motor, 6. Hot wind wheel, 7. Aluminum bracket, 8. Combustion-supporting wind wheel brsuhless motor, 9. Combustion-supporting air inlet, 10. Combustion-supporting wind wheel, 11. Combustion chamber assembly, 12. Ignition plug assembly, 13. Fuel inlet, 14. Exhaust gas outlet, 15. Controller, 16. First temperature sensor, 17. Second temperature sensor, and 18. Sealing damping pad.

### Detailed description of illustrative embodiments

In the following, the technical solutions in the embodiments of this invention will be clearly and completely described in connection with the drawings in the embodiments of this invention. Obviously, the described embodiments are only a part of the embodiments of this invention, but not all of the embodiments.

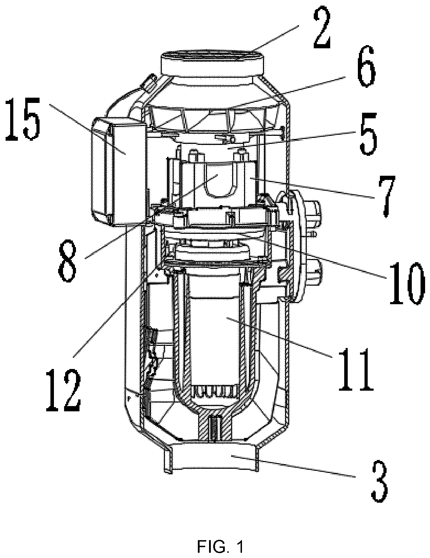

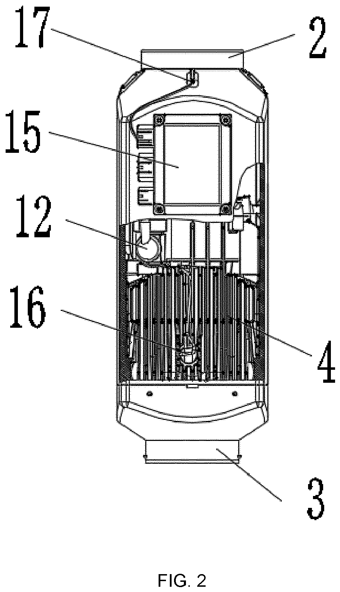

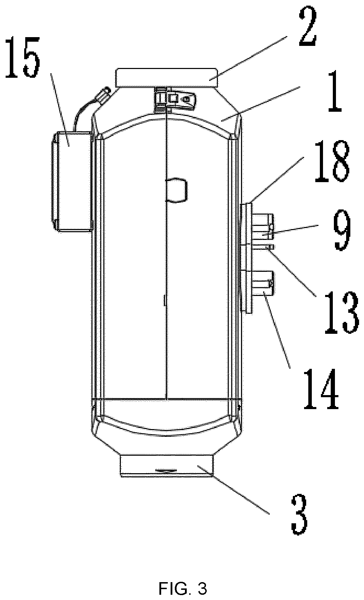

As shown in FIGS. 1 to 3, a dual brushless motor combustion head parking fuel air heater, including a housing assembly 1, an air inlet 2 connected to the housing assembly 1 and an air outlet 3 connected to the housing assembly 1. A heat exchanger 4 is provided at an end of the housing assembly 1 close to the air outlet 3. A heat exchange channel is arranged between the heat exchanger 4 and the housing assembly 1, and the heat exchange channel is respectively communicated with the air inlet 2 and the air outlet 3. A hot wind wheel brushless motor 5 is provided at the air inlet 2, and the hot wind wheel brushless motor 5 is connected with a hot wind wheel 6. The heat exchanger 4 is connected with an aluminum bracket 7, and a combustion-supporting wind wheel brushless motor 8 and a combustion-supporting air inlet 9 are provided in the aluminum bracket 7. An output shaft of the combustion-supporting wind wheel brushless motor 8 is configured to penetrate through the aluminum bracket 7 and connect with a combustion-supporting wind wheel 10, and the combustion-supporting air inlet 9 is located at one side close to the combustion-supporting wind wheel 10. A combustion chamber assembly 11 is provided inside the heat exchanger 4, the combustion chamber assembly 11 and the combustion-supporting wind wheel 10 are located on a same straight line, and an ignition plug assembly 12 and a fuel inlet 13 are provided inside the combustion chamber assembly 11. A controller 15 is provided on an outside of the housing assembly 1, and the controller 15 is respectively electrically connected with the hot wind wheel brushless motor 5, the combustion-supporting wind wheel brushless motor 8 and the ignition plug assembly 12.

In a specific embodiment of this invention, a first temperature sensor 16 is provided on an outer side wall of the heat exchanger 4, and the first temperature sensor 16 is electrically connected to the controller 15.

In a specific embodiment of this invention, a second temperature sensor 17 is provided at the air inlet 2, and the second temperature sensor 17 is electrically connected to the controller 15.

In a specific embodiment of this invention, the fuel inlet 13 is connected with a fuel volatilization net.

In a specific embodiment of this invention, a sealing damping pad 18 is provided on an outer side wall of the housing assembly 1, the heat exchanger 4 defines an exhaust gas outlet 14, and the combustion-supporting air inlet 9, the exhaust gas outlet 14 and the fuel inlet 13 are configured to extend to the sealing damping pad 18.

In order to facilitate the understanding of the above-mentioned technical solutions of this invention, the above-mentioned technical solutions of this invention are described in detail below through specific usage modes.

In specific use, according to the dual brushless motor combustion head parking fuel air heater of this invention, the combustion-supporting wind wheel brushless motor 8 drives the combustion-supporting wind wheel 10 to rotate when a whole machine is ignited, so that oxygen enters from the combustion-supporting air inlet 9 and then enters the combustion chamber assembly 11. Fuel is transported to the fuel volatilization net through the fuel inlet 13 in the combustion chamber assembly 11 to form atomized fuel with the combustion-supporting wind wheel 10. At the same time, the ignition plug assembly 12 ignites, and then flames out when a preset temperature difference is detected by the first temperature sensor 16. The controller 15 controls gradual increase of fuel supply and combustion-supporting air volume. The heat exchanger 4 diffuses heat into the heat exchange channel, and finally the heat is carried out by the hot wind wheel 6. The controller 15 controls reduction of the fuel volume and the combustion-supporting air volume, at the same time controls increase of a power of the hot wind wheel brushless motor 5, and controls the hot wind wheel 6 to carry out the heat when an actual inlet air temperature detected by the second temperature sensor 17 is higher than a preset inlet air temperature. The controller 15 controls fuel cut-off, cease-fire and alarm, controls the combustion-supporting wind wheel 10 to gradually slow down and stop, and controls the hot wind wheel 6 to increase the rotating speed when a temperature detected by the first temperature sensor 16 is higher than a preset alarm temperature. The controller 15 controls cut-off of fuel passage of the fuel inlet 13, at the same time controls the combustion-supporting wind wheel 10 to gradually slow down and stop, controls the ignition plug assembly 12 to ignite to clean up remaining fuel, and controls the hot wind wheel 6 to increase the rotating speed to carry out heat to reduce shutdown delay when shutting down.

The above are only preferred embodiments of this invention and are not used to limit this invention.

## Claims

1. A dual brushless motor combustion head parking fuel air heater, comprising a housing assembly (1), an air inlet (2) connected to the housing assembly (1) and an air outlet (3) connected to the housing assembly (1), wherein a heat exchanger (4) is provided at an end of the housing assembly (1) close to the air outlet (3), a heat exchange channel is arranged between the heat exchanger (4) and the housing assembly (1), the heat exchange channel is respectively communicated with the air inlet (2) and the air outlet (3), a hot wind wheel brushless motor (5) is provided at the air inlet (2), the hot wind wheel brushless motor (5) is connected with a hot wind wheel (6), the heat exchanger (4) is connected with an aluminum bracket (7), a combustion-supporting wind wheel brushless motor (8) and a combustion-supporting air inlet (9) are provided in the aluminum bracket (7), an output shaft of the combustion-supporting wind wheel brushless motor (8) is configured to penetrate through the aluminum bracket (7) and connect with a combustion-supporting wind wheel (10), the combustion-supporting air inlet (9) is located at one side close to the combustion-supporting wind wheel (10), a combustion chamber assembly (11) is provided inside the heat exchanger (4), the combustion chamber assembly (11) and the combustion-supporting wind wheel (10) are located on a same straight line, an ignition plug assembly (12) and a fuel inlet (13) are provided inside the combustion chamber assembly (11), a controller (15) is provided on an outside of the housing assembly (1), and the controller (15) is respectively electrically connected with the hot wind wheel brushless motor (5), the combustion-supporting wind wheel brushless motor (8) and the ignition plug assembly (12),
**characterized in that**:
the combustion-supporting wind wheel brushless motor (8) is configured to drive the combustion-supporting wind wheel (10) to rotate when a whole machine is ignited, the controller (15) is configured to control gradual increase of fuel supply and combustion-supporting air volume, the heat exchanger (4) is configured to diffuse heat into the heat exchange channel and the hot wind wheel (6) is configured to carry out the heat,
the controller (15) is further configured to control reduction of the fuel volume and the combustion-supporting air volume, at the same time control increase of a power of the hot wind wheel brushless motor (5), and control the hot wind wheel (6) to carry out the heat when an actual inlet air temperature detected by the second temperature sensor (17) is higher than a preset inlet air temperature, and
the controller (15) is further configured to control fuel cut-off, cease-fire and alarm, control the combustion-supporting wind wheel (10) to gradually slow down and stop, and control the hot wind wheel (6) to increase the rotating speed when a temperature detected by the first temperature sensor (16) is higher than a preset alarm temperature.

2. The dual brushless motor combustion head parking fuel air heater of claim 1, wherein a first temperature sensor (16) is provided on an outer side wall of the heat exchanger (4), and the first temperature sensor (16) is electrically connected to the controller (15).

3. The dual brushless motor combustion head parking fuel air heater of claim 1, wherein a second temperature sensor (17) is provided at the air inlet (2), and the second temperature sensor (17) is electrically connected to the controller (15).

4. The dual brushless motor combustion head parking fuel air heater of claim 1, wherein the fuel inlet (13) is connected with a fuel volatilization net.

5. The dual brushless motor combustion head parking fuel air heater of claim 1, wherein a sealing damping pad (18) is provided on an outer side wall of the housing assembly (1), the heat exchanger (4) defines an exhaust gas outlet (14), and the combustion-supporting air inlet (9), the exhaust gas outlet (14) and the fuel inlet (13) are configured to extend to the sealing damping pad (18).

6. The dual brushless motor combustion head parking fuel air heater of claim 1, wherein the controller is configured to control rotating speeds of the hot wind wheel (6) and the combustion-supporting wind wheel (10) respectively to reduce downshift time and shutdown delay time.

7. The dual brushless motor combustion head parking fuel air heater of claim 4, wherein the combustion-supporting wind wheel brushless motor (8) is configured to drive the combustion-supporting wind wheel (10) to rotate when a whole machine is ignited, so that oxygen enters from the combustion-supporting air inlet (9) and then enters the combustion chamber assembly (11), the combustion chamber assembly (11) is configured to transport fuel to the fuel volatilization net through the fuel inlet (13) and form atomized fuel with the combustion-supporting wind wheel (10), the ignition plug assembly (12) is configured for ignition and configured to flameout when a preset temperature difference is detected by the first temperature sensor (16).

8. The dual brushless motor combustion head parking fuel air heater of claim 7, wherein the controller (15) is further configured to control cut-off of fuel passage of the fuel inlet (13), at the same time control the combustion-supporting wind wheel (10) to gradually slow down and stop, control the ignition plug assembly (12) to ignite to clean up remaining fuel, and control the hot wind wheel (6) to increase the rotating speed to carry out heat to reduce shutdown delay when shutting down.

## Patentansprüche

1. Standbrennstoff-Lufterhitzer mit bürstenlosem Doppelmotor-Verbrennungskopf, umfassend eine Gehäusebaugruppe (1), einen mit der Gehäusebaugruppe (1) verbundenen Lufteinlass (2) und einen mit der Gehäusebaugruppe (1) verbundenen Luftauslass (3), wobei ein Wärmetauscher (4) an einem Ende der Gehäusebaugruppe (1) in der Nähe des Luftauslasses (3) vorgesehen ist, wobei ein Wärmetauscherkanal zwischen dem Wärmetauscher (4) und der Gehäusebaugruppe (1) angeordnet ist, wobei der Wärmetauscherkanal jeweils mit dem Lufteinlass (2) und dem Luftauslass (3) in Verbindung steht, wobei ein bürstenloser Heißwindradmotor (5) an dem Lufteinlass (2) vorgesehen ist, wobei der bürstenlose Heißwindradmotor (5) mit einem Heißwindrad (6) verbunden ist, wobei der Wärmetauscher (4) mit einer Aluminiumhalterung (7) verbunden ist, wobei ein verbrennungsunterstützender bürstenloser Windradmotor (8) und ein verbrennungsunterstützender Lufteinlass (9) in der Aluminiumhalterung (7) vorgesehen sind, wobei eine Ausgangswelle des verbrennungsunterstützenden bürstenlosen Windradmotors (8) so konfiguriert ist, dass sie die Aluminiumhalterung (7) durchdringt und mit einem verbrennungsunterstützenden Windrad (10) verbunden ist, wobei der verbrennungsunterstützende Lufteinlass (9) an einer Seite in der Nähe des verbrennungsunterstützenden Windrads (10) angeordnet ist, wobei eine Verbrennungskammeranordnung (11) im Inneren des Wärmetauschers (4) vorgesehen ist, wobei die Verbrennungskammeranordnung (11) und das verbrennungsunterstützende Windrad (10) auf einer gleichen geraden Linie angeordnet sind, wobei eine Zündkerzenanordnung (12) und ein Kraftstoffeinlass (13) im Inneren der Verbrennungskammeranordnung (11) vorgesehen sind, wobei eine Steuerung (15) an der Außenseite vorgesehen Gehäusebaugruppe (1) ist, und wobei die Steuerung (15) jeweils elektrisch mit dem bürstenlosen Heißwindradmotor (5), dem verbrennungsunterstützenden bürstenlosen Windradmotor (8) und der Zündkerzenbaugruppe (12) verbunden ist,
**dadurch gekennzeichnet,**
**dass** der verbrennungsunterstützende bürstenlose Windradmotor (8) so konfiguriert ist, dass er das verbrennungsunterstützende Windrad (10) antreibt, damit es sich dreht, wenn die gesamte Maschine gezündet wird, wobei die Steuerung (15) so konfiguriert ist, dass sie die schrittweise Erhöhung der Brennstoffzufuhr und des verbrennungsunterstützenden Luftvolumens steuert, wobei der Wärmetauscher (4) so konfiguriert ist, dass er Wärme in den Wärmeaustauschkanal verteilt, und wobei das Heißwindrad (6) so konfiguriert ist, dass es die Wärme abführt,
**dass** die Steuerung (15) ferner so konfiguriert ist, dass sie die Verringerung des Brennstoffvolumens und des verbrennungsunterstützenden Luftvolumens steuert, gleichzeitig die Erhöhung einer Leistung des bürstenlosen Heißwindradmotors (5) steuert und das Heißwindrad (6) so steuert, dass es die Wärme ausführt, wenn eine von dem zweiten Temperatursensor (17) erfasste tatsächliche Einlasslufttemperatur höher als eine voreingestellte Einlasslufttemperatur ist, und
**dass** die Steuerung (15) ferner so konfiguriert ist, dass sie die Brennstoffunterbrechung,
die Waffenstillstand und den Alarm steuert und das verbrennungsunterstützende Windrad (10) so steuert, dass es allmählich langsamer wird und stoppt, und wobei das Heißwindrad (6) so steuert, dass es die Drehgeschwindigkeit erhöht, wenn eine von dem ersten Temperatursensor (16) erfasste Temperatur höher als eine voreingestellte Alarmtemperatur ist.

2. Standbrennstoff-Lufterhitzer mit bürstenlosem Doppelmotor-Verbrennungskopf nach Anspruch 1, wobei ein erster Temperatursensor (16) an einer äußeren Seitenwand des Wärmetauschers (4) vorgesehen ist und der erste Temperatursensor (16) elektrisch mit der Steuerung(15) verbunden ist.

3. Standbrennstoff-Lufterhitzer mit bürstenlosem Doppelmotor-Verbrennungskopf nach Anspruch 1, wobei ein zweiter Temperatursensor (17) am Lufteinlass (2) vorgesehen ist und der zweite Temperatursensor (17) elektrisch mit der Steuerung (15) verbunden ist.

4. Standbrennstoff-Lufterhitzer mit bürstenlosem Doppelmotor-Verbrennungskopf nach Anspruch 1, wobei der Brennstoffeinlass (13) mit einem Brennstoffverflüchtigungsnetz verbunden ist.

5. Standbrennstoff-Lufterhitzer mit bürstenlosem Doppelmotor-Verbrennungskopf nach Anspruch 1, wobei ein abdichtendes Dämpfungspolster (18) an einer äußeren Seitenwand der Gehäusebaugruppe (1) vorgesehen ist, wobei der Wärmetauscher (4) einen Abgasauslass (14) definiert, und wobei der verbrennungsunterstützende Lufteinlass (9), der Abgasauslass (14) und der Brennstoffeinlass (13) so konfiguriert sind, dass sie sich zum abdichtenden Dämpfungspolster (18) erstrecken.

6. Standbrennstoff-Lufterhitzer mit bürstenlosem Doppelmotor-Verbrennungskopf nach Anspruch 1, wobei die Steuerung so konfiguriert ist, dass sie die Drehgeschwindigkeiten des Heißwindrads (6) bzw. des verbrennungsunterstützenden Windrads (10) steuert, um die Herunterschaltzeit und die Abschaltverzögerungszeit zu verringern.

7. Standbrennstoff-Lufterhitzer mit bürstenlosem Doppelmotor-Verbrennungskopf nach Anspruch 4, wobei der verbrennungsunterstützende bürstenlose Windradmotor (8) so konfiguriert ist, dass er das verbrennungsunterstützende Windrad (10) antreibt, damit es sich dreht, wenn die gesamte Maschine gezündet wird, so dass Sauerstoff aus dem verbrennungsunterstützenden Lufteinlass (9) austritt und dann in die Verbrennungskammeranordnung (11) eintritt, wobei die Verbrennungskammeranordnung (11) so konfiguriert ist, dass sie Kraftstoff durch den Kraftstoffeinlass (13) zum Kraftstoffverflüchtigungsnetz transportiert und mit dem verbrennungsunterstützenden Windrad (10) zerstäubten Kraftstoff bildet, wobei die Zündkerzenanordnung (12) zur Zündung konfiguriert ist und so konfiguriert ist, dass sie die Zündung abschaltet, wenn eine voreingestellte Temperaturdifferenz von dem ersten Temperatursensor (16) erfasst wird.

8. Standbrennstoff-Lufterhitzer mit bürstenlosem Doppelmotor-Verbrennungskopf nach Anspruch 7, wobei die Steuerung (15) ferner so konfiguriert ist, dass sie die Unterbrechung des Brennstoffdurchlasses des Brennstoffeinlasses (13) steuert und gleichzeitig das verbrennungsunterstützende Windrad (10) so steuert, dass es allmählich langsamer wird und stoppt, wobei die Zündkerzenanordnung (12) so steuert, dass sie zündet, um den verbleibenden Brennstoff zu beseitigen, und wobei das Heißwindrad (6) so steuert, dass es die Drehgeschwindigkeit erhöht, um Wärme abzugeben und die Abschaltverzögerung beim Abschalten zu verringern.

## Revendications

1. Réchauffeur d'air de carburant à stationnement à double tête de combustion sans balais, comprenant un ensemble de logement (1), une entrée d'air (2) reliée à l'ensemble de logement (1) et une sortie d'air (3) reliée à l'ensemble de logement (1), dans lequel un échangeur de chaleur (4) est prévu à une extrémité de l'ensemble de logement (1) proche de la sortie d'air (3), un canal d'échange de chaleur est disposé entre l'échangeur de chaleur (4) et l'ensemble de logement (1), le canal d'échange de chaleur est en communication avec l'entrée d'air (2) et la sortie d'air (3) respectivement, un moteur sans balais à roue à vent chaud (5) est prévu à l'entrée d'air (2), le moteur sans balais à roue à vent chaud (5) est relié à une roue à vent chaud (6), l'échangeur de chaleur (4) est relié à un support en aluminium (7), un moteur sans balais à roue à vent de support de combustion (8) et une entrée d'air de support de combustion (9) sont prévus dans le support en aluminium (7), un arbre de sortie du moteur sans balais à roue à vent de support de combustion (8) est configuré pour pénétrer à travers le support en aluminium (7) et être relié à une roue à vent de support de combustion (10), l'entrée d'air de support de combustion (9) est située sur un côté proche de la roue à vent de support de combustion (10), un ensemble de chambre de combustion (11) est prévu à l'intérieur de l'échangeur de chaleur (4), l'ensemble de chambre de combustion (11) et la roue à vent de support de combustion (10) sont situés sur une même ligne droite, un ensemble de bougie d'allumage (12) et une entrée de carburant (13) sont prévus à l'intérieur de l'ensemble de chambre de combustion (11), un contrôleur (15) est prévu à l'extérieur de l'ensemble de logement (1), et le contrôleur (15) est connecté électriquement au moteur sans balais à roue à vent chaud (5), au moteur sans balais à roue à vent de support de combustion (8) et à l'ensemble de bougie d'allumage (12) respectivement,
**caractérisé en ce que** :
le moteur sans balais à roue à vent de support de combustion (8) est configuré pour entraîner la roue à vent de support de combustion (10) à tourner lorsqu'une machine entière est allumée, le contrôleur (15) est configuré pour contrôler une augmentation progressive de l'alimentation en carburant et du volume d'air de combustion, l'échangeur de chaleur (4) est configuré pour diffuser la chaleur vers le canal d'échange de chaleur et la roue à vent chaud (6) est configurée pour réchauffer,
le contrôleur (15) est configuré en outre pour contrôler une réduction du volume de carburant et du volume d'air de combustion, et contrôler également une augmentation de la puissance du moteur sans balais à roue à vent chaud (5), et contrôler la roue à vent chaud (6) à réchauffer lorsqu'une température réelle de l'air d'entrée détectée par un deuxième capteur de température (17) est supérieure à une température d'air d'entrée prédéfinie, et
le contrôleur (15) est configuré en outre pour contrôler une coupure de carburant, un éteint du feu et une alarme, contrôler la roue à vent de support de combustion (10) à se ralentir et s'arrêter progressivement, et contrôler la roue à vent chaud (6) à augmenter la vitesse de rotation lorsqu'une température détectée par un premier capteur de température (16) est supérieure à une température d'alarme prédéfinie.

2. Réchauffeur d'air de carburant à stationnement à double tête de combustion sans balais selon la revendication 1, dans lequel un premier capteur de température (16) est fourni sur une paroi latérale extérieure de l'échangeur de chaleur (4) et le premier capteur de température (16) est connecté électriquement au contrôleur (15).

3. Réchauffeur d'air de carburant à stationnement à double tête de combustion sans balais selon la revendication 1, dans lequel un deuxième capteur de température (17) est prévu à l'entrée d'air (2) et le deuxième capteur de température (17) est connecté électriquement au contrôleur (15).

4. Réchauffeur d'air de carburant à stationnement à double tête de combustion sans balais selon la revendication 1, dans lequel l'entrée de carburant (13) est reliée à une grille filtre de volatilisation de carburant.

5. Réchauffeur d'air de carburant à stationnement à double tête de combustion sans balais selon la revendication 1, dans lequel un tampon d'amortissement d'étanchéité (18) est prévu sur une paroi latérale extérieure de l'ensemble de logement (1), l'échangeur de chaleur (4) délimite une sortie de gaz d'échappement (14), et l'entrée d'air de support de combustion (9), la sortie de gaz d'échappement (14) et l'entrée de carburant (13) sont configurées pour s'étendre jusqu'au tampon d'amortissement d'étanchéité (18).

6. Réchauffeur d'air de carburant à stationnement à double tête de combustion sans balais selon la revendication 1, dans lequel le contrôleur est configuré pour contrôler les vitesses de rotation de la roue à vent chaud (6) et de la roue à vent de support de combustion (10) respectivement afin de réduire une durée de réduction de vitesse et une durée de retard d'arrêt.

7. Réchauffeur d'air de carburant à stationnement à double tête de combustion sans balais selon la revendication 4, dans lequel le moteur sans balais à roue à vent de support de combustion (8) est configuré pour entraîner la roue à vent de support de combustion (10) à tourner lorsqu'une machine entière est allumée, de sorte que l'oxygène pénètre par l'entrée d'air de support de combustion (9) puis pénètre dans l'ensemble de chambre de combustion (11), l'ensemble de la chambre de combustion (11) est configuré pour transporter le carburant vers la grille filtre de volatilisation de carburant à travers l'entrée de carburant (13) et former du carburant atomisé avec la roue à vent de support de combustion (10), l'ensemble de bougie d'allumage (12) est configuré pour s'allumer et pour s'éteindre lorsqu'une différence de température prédéfinie est détectée par le premier capteur de température (16).

8. Réchauffeur d'air de carburant à stationnement à double tête de combustion sans balais selon la revendication 7, dans lequel le contrôleur (15) est configuré en outre pour contrôler une coupure du passage du carburant de l'entrée de carburant (13), et contrôler également la roue à vent de support de combustion (10) à se ralentir et s'arrêter progressivement, contrôler l'ensemble de bougie d'allumage (12) à s'allumer afin de nettoyer le carburant restant, et contrôler la roue à vent chaud (6) à augmenter la vitesse de rotation afin réchauffer, réduisant ainsi le délai d'arrêt lors de l'arrêt.
